# EUROPÄISCHE PATENTSCHRIFT

(11) **EP 3 938 302 B1**
(45) Veröffentlichungstag und Bekanntmachung des Hinweises auf die Patenterteilung: **07.06.2023**
(21) Anmeldenummer: 20708495.5
(22) Anmeldetag: 05.03.2020
(51) Int. Cl.: B65G 65/06, B65G 65/36, B65G 65/38

(54) **RUNDLAGER**
CIRCULAR STORE
PALIER CIRCULAIRE

(30) Priorität: 13.03.2019 DE 102019203416; 13.03.2019 BE 201905158
(43) Veröffentlichungstag der Anmeldung: 19.01.2022
(73) Patentinhaber: thyssenkrupp Industrial Solutions AG, 45143 Essen (DE); thyssenkrupp AG, 45143 Essen (DE)
(72) Erfinder: SCHOLZ, Guido, 48291 Telgte (DE); KÖNNING, Ludwig, 59227 Ahlen (DE); WESTMATTELMANN, Ralf, 59302 Oelde (DE); MENNE, Michael, 44869 Bochum (DE); BERGHOFF, Sven, 44795 Bochum (DE)
(74) Vertreter: thyssenkrupp Intellectual Property GmbH
(86) Internationale Anmeldenummer: PCT/EP2020/055773
(87) Internationale Veröffentlichungsnummer: WO 2020/182590

(56) Entgegenhaltungen:
- CN-U- 206 013 914
- DE-A1- 3 136 316
- DE-A1- 3 524 200
- DE-C2- 3 121 518
- US-A- 4 162 017

## Beschreibung

Die Erfindung betrifft ein Rundlager für Schüttgut für die gleichzeitige Einlagerung von verschiedenen Schüttgütern.

Für verschiedene Prozesse, zum Beispiel bei der Zementherstellung, ist regelmäßig die Verwendung verschiedener Schüttgüter zur Herstellung eines Produktes notwendig. Diese verschiedenen Schüttgüter können in einzelnen getrennten Lagern bereitgestellt werden, was jedoch nur bei großen Mengen des einzelnen Schüttguts wirtschaftlich sinnvoll ist. Oftmals ist es mengenmäßig günstiger ein Lager zu haben, in welchem mehrere Schüttgüter getrennt durch Trennwände gelagert und abrufbar sind.

Aus verschiedenen Gründen, zum Beispiel um die Lärm- und Staubemissionen auf die Umgebung zu minimieren oder die Umwelteinflüsse wie Regen und Schnee auf den Prozess zu minimieren, ist es vorteilhaft, Lager innerhalb von Gebäuden zu errichten. Die Kosten für das Gebäude sind vergleichsweise hoch gegenüber den Maschinenkosten. Darüber hinaus sind Gebäude für Rundlager günstiger in der Herstellung als Gebäude für Längslager. Aus diesem Grund sind Rundlager zu bevorzugen.

Bei Rundlager ergibt sich jedoch das Problem, dass bei radialer Anordnung der Trennwände und durch die endliche Dicke der Trennwand sowie des Schüttgutabtragen Förderorgans ein Totvolumen des Schüttguts an der Trennwand vorliegt, welches nicht gefördert werden kann.

Um dieses Totvolumen zu reduzieren sind verschiedene Ansätze bekannt.

Aus der DE 31 21 518 C2 ist ein Rundlager für Schüttgüter nach dem Oberbegriff des Anspruchs 1 mit radialen Zwischenwänden bekannt.

Aus der EP 0 219 365 A1 ist ein Kratzerförderer für einen kreisförmigen Lagerbereich bekannt.

Aus der CN 206 013 914 U ist ein Rundlager bekannt.

Aus der DE 35 24 200 A1 ist ein Rundlager für Schüttgut mit einer Mittelsäule und einem an der Mittelsäule horizontal schwenkbar gelagerten Einlagerarm und einem radial verfahrbaren Eimerkettenbagger bekannt.

Aus der US 4 162 017 A ist eine Vorrichtung zum Lagern granularer und pulverförmiger Produkte bekannt.

Aus der DE 31 36 316 A1 ist eine Kratzerkombination mit mehreren selbsttätig betätigbaren Kratzförderern zur Entnahme von Schüttgut bekannt, welche nur einen Arm umfassenden in vertikaler sowie in horizontaler Ebene schwenkbaren Entspeicherungskratzer aufweist.

Insbesondere die beidseitige Halterung des Kratzerförderers auf Schienen, wie zum Beispiel in der EP 0 219 365 A1 gestaltet sich aufwendig, da auf beiden Seiten die Antriebe zueinander gesteuert und verfahren werden müssen. Zudem müssen die Schienen während des Betriebes von Staub und Verschmutzungen befreit werden.

Aufgabe der Erfindung ist es, eine kompakte und langzeitstabile Entnahmevorrichtung für ein Rundlager mit verschiedenen Schüttgütern, welche durch Trennwände voneinander getrennt sind, bereitzustellen, welche das Schüttgut ohne Entstehung von Toträumen wieder aufnehmen kann.

Gelöst wird diese Aufgabe durch ein Rundlager mit den in Anspruch 1 angegebenen Merkmalen sowie ein Verfahren mit den in Anspruch 17 angegebenen Merkmalen. Vorteilhafte Weiterbildungen ergeben sich aus den Unteransprüchen, der nachfolgenden Beschreibung sowie den Zeichnungen.

Das erfindungsgemäße Rundlager für Schüttgut weist wenigstens einen ersten Lagerbereich für Schüttgut und einen zweiten Lagerbereich für Schüttgut auf. Der erste Lagerbereich und der zweite Lagerbereich sind durch wenigstens eine erste Trennwand getrennt.

Das Rundlager kann genau zwei Lagerbereiche, den ersten Lagerbereich und den zweiten Lagerbereich aufweisen. In diesem Fall sind der erste Lagerbereich und der zweite Lagerbereich auf der einen Seite durch eine erste Trennwand und auf der gegenüberliegenden Seite durch eine zweite Trennwand voneinander getrennt. Bevorzugt weist das Rundlager drei bis zehn Lagerbereiche auf, welche jeweils durch Trennwände voneinander getrennt sind. Besonders bevorzugt weist das Rundlager vier bis acht Lagerbereiche auf, welche jeweils durch Trennwände voneinander getrennt sind. Die Lagerbereiche müssen hierbei nicht gleich groß sein, sondern können verschiedene Größen aufweisen. Dieses ist vorteilhaft, wenn verschiedene Schüttgüter in verschiedenen Mengen für die nachfolgenden Prozesse benötigt werden. Es kann vorgesehen sein, dass ein Lagerbereich permanent schüttgutfrei bleibt, um einen permanenten Zugang zu ermöglichen.

Das Rundlager weist wenigstens eine erste Entnahmevorrichtung auf, wobei die erste Entnahmevorrichtung um die zentrale Achse des Rundlagers drehbar angeordnet ist. Die zentrale Achse ist senkrecht angeordnet. Die zentrale Achse ergibt sich aus der Senkrechten, welche auf der Mitte des Rundlagers umschließenden Kreises steht. Die erste Entnahmevorrichtung weist ein erstes Förderorgan auf.

Die erste Entnahmevorrichtung weist eine zweite Achse auf, wobei die zweite Achse parallel und mit einem ersten Achsabstand zur zentralen Achse angeordnet ist. Die erste Entnahmevorrichtung weist einen ersten Arm auf. Der erste Arm ist eine Konstruktion, die die zentrale Achse mit der zweiten Achse miteinander verbindet. Der erste Arm ist um die zentrale Achse rotierbar. Die zentrale Achse und die zweite Achse verlaufen durch den ersten Arm. Das erste Förderorgan ist um die zweite Achse drehbar mit dem ersten Arm verbunden.

Durch die Rotierbarkeit des ersten Armes um die zentrale Achse sowie des ersten Förderorgans um die zweite Achse kann das erste Förderorgan ohne Totraum parallel zur Trennwand ausgerichtet werden. Durch die Verbindung der Elemente an den Achsen können diese durch Radialdichtungen sehr gut und zuverlässig abgedichtet und damit geschützt werden. Somit müssen diese nicht wie bei offen liegenden Schienen während des Betriebes von Staub und Verschmutzungen befreit werden.

Beispiele für Schüttgüter, welche in ein Rundlager eingelagert werden können, sind Kalkstein, Sand, Erz, Gips, Schlacke und Ton, aber beispielsweise auch Filterstäube oder Aschen.

In einer weiteren Ausführungsform der Erfindung verläuft die zweite Achse durch das äußere Ende des ersten Arms, wobei das äußere Ende des ersten Arms von der zentralen Achse abgewandt ist.

Unter dem äußeren Ende versteht der Fachmann, dass diese Achse nicht am äußersten Ende angeordnet sein muss, da dann keine tragende Funktion mehr gegeben sein kann. Daher ist unter dem äußeren Ende der Bereich zu verstehen der von dem äußersten Ende bis um die Breite des Bauteils entfernt ist.

In einer weiteren Ausführungsform der Erfindung weist die erste Entnahmevorrichtung einen ersten Drehantrieb auf, wobei der erste Drehantrieb zur Rotation des ersten Armes um die zentrale Achse ausgebildet ist. Drehantriebe sind robust, durch Radialdichtungen gut abdichtbar und leicht steuerbar.

In einer weiteren Ausführungsform der Erfindung weist die erste Entnahmevorrichtung einen zweiten Drehantrieb auf, wobei der zweite Drehantrieb zur Rotation des ersten Förderorgans um die zweite Achse ausgebildet ist. Drehantriebe sind robust, durch Radialdichtungen gut abdichtbar und leicht steuerbar.

In einer weiteren Ausführungsform der Erfindung ist das erste Förderorgan vertikal schwenkbar. Die vertikale Schwenkbarkeit erfolgt bevorzugt um eine dritte Achse. Die vertikale Schwenkbarkeit dient der Anpassung des ersten Förderorgans an den Füllstand des Schüttguts. Weiter kann die abzutragende Schichtdicke des Schüttgutes eingestellt werden. Die dritte Achse ist vorzugsweise horizontal angeordnet.

In einer weiteren Ausführungsform der Erfindung ist das erste Förderorgan als Kettenausleger ausgebildet. Ein Kettenausleger trägt das Schüttgut ab, in dem schaufelförmige oder eimerförmige Vorrichtungen über das Schüttgut gezogen und das Schüttgut somit in die Mitte des Rundlagers gefordert wird. Ein Kettenausleger weist somit vorzugsweise ein umlaufendes Transportaggregat auf, auf welchen die schaufelförmigen oder eimerförmigen Vorrichtungen angeordnet sind. Das Transportaggregat kann in Form einer Kette ausgeführt sein.

In einer weiteren Ausführungsform der Erfindung weist das Rundlager eine Zentralschurre auf, wobei die Zentralschurre mittig um die zentrale Achse angeordnet ist. Die Zentralschurre transportiert das durch das erste Förderorgan geförderte Schüttgut nach unten ab. Die Zentralschurre ist insbesondere trichterförmig ausgebildet.

In einer weiteren Ausführungsform der Erfindung ist unterhalb des Rundlagers und unterhalb der Zentralschurre ein Abtransportband angeordnet, wobei das Abtransportband zum Abtransport des Schüttgutes ausgebildet ist. Insbesondere erstreckt sich das Abtransportband über das Rundlager hinaus, um Schüttgut an andere Einrichtungen übergeben zu können.

In einer weiteren Ausführungsform der Erfindung weist, das Rundlager wenigstens drei, bevorzugt drei bis zehn, besonders bevorzugt vier bis acht Lagerbereiche auf, welche jeweils durch Trennwände voneinander getrennt sind.

In einer weiteren Ausführungsform der Erfindung ist der Abwurfpunkt des ersten Förderorgans oberhalb der Zentralschurre angeordnet. Hierdurch ist zum einen sichergestellt, dass das Schüttgut durch das erste Förderorgan direkt in die Zentralschurre gefördert wird. Zum anderen erstrecken sich die Trennwände nicht über die Zentralschurre, da hier eine Trennfunktion nicht benötigt wird. Somit kann der erste Arm sich im Bereich oberhalb der Zentralschurre frei rotierend bewegen.

In einer weiteren Ausführungsform der Erfindung weist das erste Förderorgan einen ersten Seitenbereich und einen zweiten Seitenbereich auf, wobei der erste Seitenbereich und der zweite Seitenbereich senkrecht entlang der Längsrichtung des ersten Förderorgans angeordnet sind. An dem ersten Seitenbereich ist eine erste Schneidvorrichtung angeordnet und an dem zweiten Seitenbereich ist eine zweite Schneidvorrichtung angeordnet. Die Schneidvorrichtungen können dazu eingesetzt werden, an den Trennwänden anhaftendes Material abzukratzen. Hierdurch kann verhindert werden das, beispielsweise scheibenartige, Materialansammlungen entstehen, welche einbrechen könnten und das erste Förderorgan beschädigen oder überfüllen könnten.

Bevorzugt sind die Schneidvorrichtungen in Längsrichtung des ersten Förderorgans mit Wirkrichtung nach unten angeordnet. Bevorzugt ist die Schneidvorrichtung über die Gesamtlänge des ersten Förderorgans angeordnet. Alternativ können eine Mehrzahl an Schneidvorrichtungen nebeneinander und/oder höhenversetzt zueinander angeordnet sein.

In einer weiteren Ausführungsform der Erfindung ist die Gesamtlänge des ersten Förderorgans größer als der Achsabstand der zentralen Achse und der zweiten Achse von der ersten Entnahmevorrichtung. Dieser ermöglicht eine besonders wirtschaftliche Ausführungsform.

In einer weiteren Ausführungsform der Erfindung weist das Rundlager einen ersten Bandausleger auf, wobei der erste Bandausleger um die zentrale Achse drehbar angeordnet ist. Der erste Bandausleger ist zum Einbringen von Schüttgut in den ersten Lagerbereich und den zweiten Lagerbereich ausgebildet. Bevorzugt weist das Rundlager weiter eine erste Bandbrücke auf, wobei die erste Bandbrücke oberhalb des ersten Bandauslegers angeordnet ist. Die erste Bandbrücke ist zur Zuführung von Schüttgut zum ersten Bandausleger ausgebildet.

In einer weiteren Ausführungsform der Erfindung ist der erste Bandausleger vertikal schwenkbar. Hierdurch kann die Abwurfhöhe des Schüttguts an den Füllstand angepasst werden, sodass Staubentwicklung reduziert wird.

In einer weiteren alternativen Ausführungsform der Erfindung weist der erste Bandausleger eine Teleskopschurre auf. Hierdurch kann auf die mechanische Nachführung des ersten Bandauslegers auf den unterschiedlichen Füllstand des Schüttgutes verzichtet werden, es wird lediglich die Länge der Teleskopschurre entsprechend des Füllstandes angepasst, sodass Staubentwicklung reduziert wird.

In einer weiteren Ausführungsform der Erfindung weist das Rundlager einen Transferturm auf, wobei der Transferturm entlang der zentralen Achse angeordnet ist. Bevorzugt ist der erste Arm Teil des Transferturms.

In einem weiteren Aspekt betrifft die Erfindung ein Verfahren nach Anspruch 17 zum Ausstapeln von Schüttgut aus einem erfindungsgemäßen Rundlager, wobei der erste Lagerbereich auf der einen Seite eine erste Trennwand und auf der gegenüberliegenden Seite eine zweite Trennwand aufweist. Das Verfahren weist die folgenden Schritte auf:
a) Anordnung des ersten Förderorgans der ersten Entnahmevorrichtung oberhalb des ersten Lagerbereichs,
b) Absenken des ersten Förderorgans bis das erste Förderorgan das Schüttgut berührt, welches im ersten Lagerbereich angeordnet ist,
c) seitliches Verschwenken des ersten Förderorgans in Richtung der ersten Trennwand,
d) Absenken des ersten Förderorgans um die Höhe der abzutragenden Schichtdicke des Schüttgutes,
e) seitliches Verschwenken des ersten Förderorgans von der ersten Trennwand in Richtung der zweiten Trennwand,
f) Absenken des ersten Förderorgans um die Höhe der abzutragenden Schichtdicke des Schüttguts.

Das erste Förderorgan ist am Ende von Schritt c) parallel zur ersten Trennwand und am Ende von Schritt e) parallel zur zweiten Trennwand angeordnet.

Durch die Rotationsfähigkeit um die zentrale Achse und die Rotationsfähigkeit um die zweite Achse kann das erste Förderorgan so verfahren werden, dass es parallel zur jeweiligen Trennwand angeordnet werden kann.

Nach Schritt f) kann das Verfahren mit Schritt c) fortgeführt werden, bis die gewünschte Menge an Schüttgut aus dem ersten Lagerbereich entnommen wurde.

Analog erfolgt ebenfalls die Entnahme von Schüttgut aus allen weiteren Lagerbereichen. Zur Auswahl des angeforderten Schüttguts wird dafür der jeweilige Lagerbereich, welcher mit dem angeforderten Schüttgut gefüllt ist, angefahren.

In einer weiteren Ausführungsform der Erfindung wird in Schritt c) das erste Förderorgan um die zweite Achse in Richtung der ersten Trennwand verschwenkt, wobei der erste Arm um die zentrale Achse entgegen der Verschwenkrichtung des ersten Förderorgans verschwenkt wird. Diese Ausführungsform ist für Lagerbereiche mit einem kleinen Winkel zwischen den Trennwänden bevorzugt.

In einer weiteren alternativen Ausführungsform der Erfindung wird in Schritt c) das erste Förderorgan um die zweite Achse in Richtung der ersten Trennwand verschwenkt, wobei der erste Arm um die zentrale Achse in die Verschwenkrichtung des ersten Förderorgans, jedoch mit einem kleineren Verschwenkwinkel, verschwenkt wird. Diese Ausführungsform ist für Lagerbereiche mit einem großen Winkel zwischen den Trennwänden bevorzugt.

Besonders bevorzugt erfolgt eine synchrone Verschwenkung, wobei die Verschwenkwinkel um die zentrale Achse und die zweite Achse abhängig sind vom Winkel zwischen den Trennwänden, der Breite der Trennwände und der Breite des ersten Förderorgans. Eine synchrone Verschwenkung kann durch unterschiedliche Verschwenkgeschwindigkeiten erreicht werden. Hierdurch ist ein kontinuierlicher Betrieb ohne zeitliche Verluste für das Ausrichten des ersten Förderorgans parallel zur Trennwand möglich. Zudem führt dieses zu einer während des seitlichen Verschwenkens konstanten Fördervolumens. Dies ist für die weiteren Prozessschritte vorteilhaft.

Alternativ können die Verschwenkungen um die zentrale Achse und um die zweite Achse abwechselnd durchgeführt werden.

In einer weiteren Ausführungsform der Erfindung wird in Schritt c) das erste Förderorgan in einem ersten Abstand zur ersten Trennwand angehoben und nach dem Erreichen der ersten Trennwand in Schritt d) in die Endposition abgesenkt. Der erste Abstand ist geringer als die Förderbreite des ersten Förderorgans. Hierdurch wird ein Abkratzen von an der ersten Trennwand anhaftenden Materialresten möglich. Dieses ist bevorzugt, wenn seitlich Schneidvorrichtung an dem ersten Förderorgan angebracht sind.

In einer weiteren Ausführungsform der Erfindung wird Schüttgut über den ersten Bandausleger in den zweiten Lagerbereich eingestapelt. Dieses kann zeitgleich der Abtragung von Schüttgut aus dem ersten Lagerbereich erfolgen.

In einer weiteren Ausführungsform der Erfindung weist das Rundlager Sensoren zur Bestimmung der Füllhöhe des Schüttguts sowie zur Position und Stellung des ersten Förderorgans auf. Diese Sensoren ermöglichen eine Automatisierung des Ausbringvorgangs des Schüttguts. Bevorzugt weist das Rundlager weiter Sensoren zur Bestimmung der Position und Stellung des ersten Bandauslegers bzw. des Abwurfpunktes auf. Diese Sensoren ermöglichen eine Automatisierung des Einbringvorgangs des Schüttguts. Unter Stellung ist die vertikale Verkippung zu verstehen.

Nachfolgend ist das erfindungsgemäße Rundlager anhand eines in den Zeichnungen dargestellten Ausführungsbeispiels näher erläutert.
- Fig. 1: Aufsicht auf ein Rundlager
- Fig. 2: Querschnitt durch das Rundlager
- Fig. 3: perspektivische Ansicht eines teilgefüllten Rundlagers
- Fig. 4: schematische Aufsicht auf ein Rundlager, Darstellung der zweiten Achse in einer ersten Position
- Fig. 5: schematische Aufsicht auf ein Rundlager, Darstellung der zweiten Achse in einer zweiten Position
- Fig. 6: Verfahren zur Entfernung von Randanhaftungen, in einer Schnittansicht

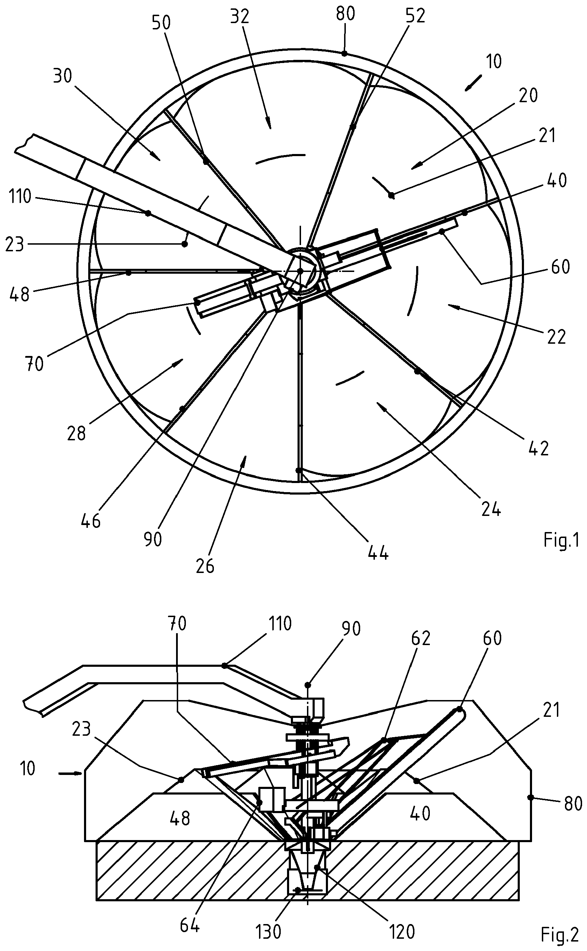

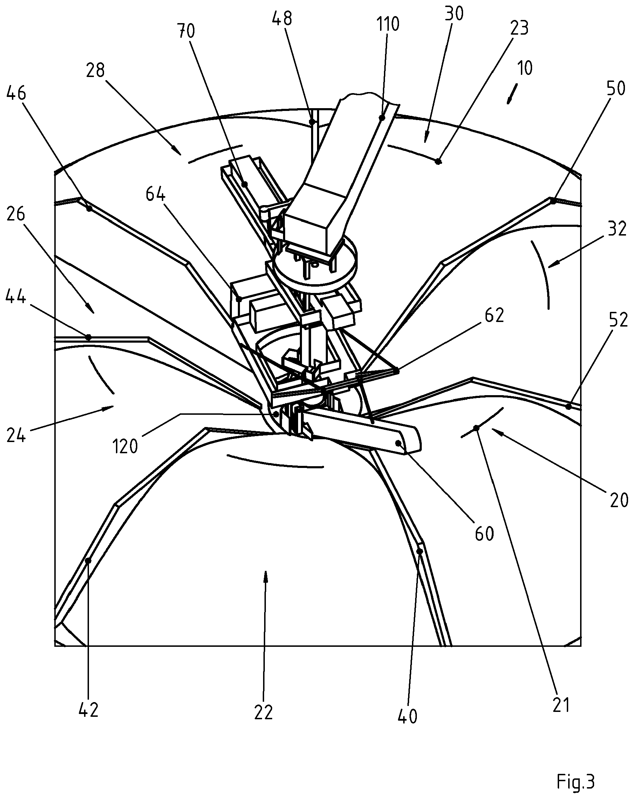

Fig. 1, Fig. 2 und Fig. 3 zeigen ein Rundlager 10 aus verschiedenen Perspektiven. Das beispielhafte Rundlager 10 weist im gezeigten Fall sieben getrennte Lagerbereiche 20, 22, 24, 26, 28, 30, 32 auf. Die Lagerbereiche 20, 22, 24, 26, 28, 30, 32 sind durch sieben Trennwände 40, 42, 44, 46, 48, 50, 52 getrennt. Das Rundlager 10 ist in einem Gebäude 80 angeordnet. Durch das Gebäude 80 werden die Schüttgüter 21, 23 vor Umwelteinflüssen geschützt und Emissionen, insbesondere Lärm und Staub auf die Umgebung, vermindert. In der Mitte des Rundlagers 10 auf der zentralen Achse 90 ist ein Transferturm angeordnet. Teil des Transferturms ist eine erste Entnahmevorrichtung, welche aus einem ersten Arm 140 und einem ersten Förderorgan 60 gebildet wird. Das erste Förderorgan 60 ist über eine Hebevorrichtung 62 vertikal um die dritte Achse verschwenkbar, um sich dem Füllstand des Schüttguts 21, 23 anpassen zu können. Zum Kräfteausgleich weist die erste Entnahmevorrichtung ein Gegengewicht 64 auf. Das erste Förderorgan 60 fördert Schüttgut in die Zentralschurre 120, von wo das Schüttgut über ein Abtransportband 130 aus dem Rundlager 10 entnommen werden kann. Um neues Schüttgut in das Rundlager 10 einbringen zu können weist das Rundlager 10 am oberen Ende des Transferturms eine erste Bandbrücke 110 auf, über welche Schüttgut zugeführt werden kann. Von hier fällt das Schüttgut auf den ersten Bandausleger 70, welcher drehbar um die zentrale Achse 90 gelagert ist. Hierdurch kann Schüttgut in jeden Lagerbereich 20, 22, 24, 26, 28, 30, 32 eingebracht werden. Zur Vermeidung von Staubentwicklung ist der erste Bandausleger 70 im gezeigten Beispiel vertikal verschwenkbar ausgebildet.

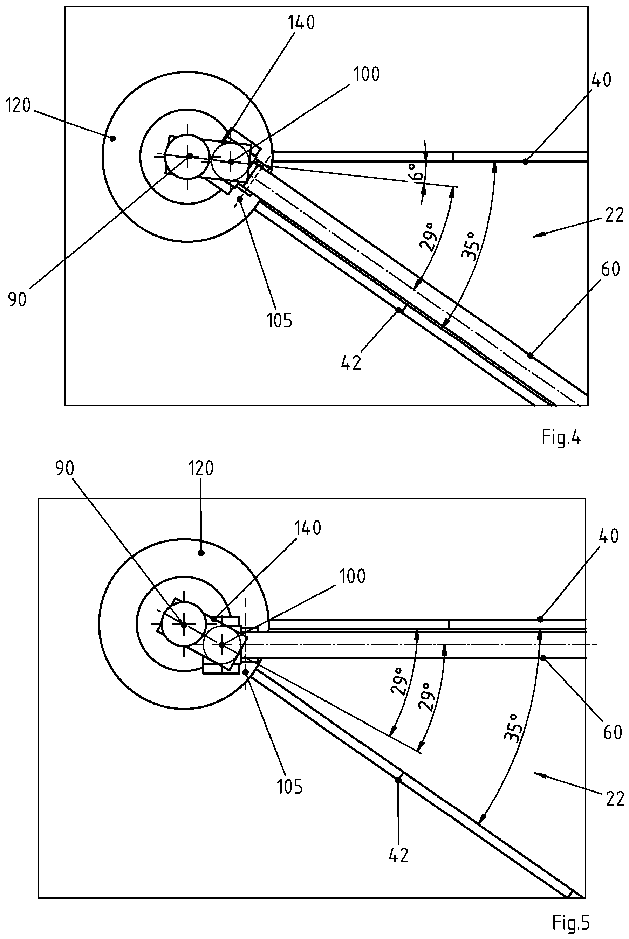

Um den wesentlichen Aspekt des ersten Arms 140 und die Verschwenkbarkeit um die zweite Achse 100 zu verdeutlichen ist dieser Ausschnitt schematisch stark vereinfacht in Fig. 4 und Fig. 5 in zwei verschiedenen Positionen gezeigt. Das erste Förderorgan 60 befindet sich zwischen der ersten Trennwand 40 und der zweiten Trennwand 42. Im gezeigten Beispiel ist der Öffnungswinkel des ersten Lagerbereichs 20 zwischen der ersten Trennwand 40 und der zweiten Trennwand 42 35°. Erkennbar ist, dass die Breite des ersten Förderorgans 60 aber auch die Breiten der ersten Trennwand 40 und der zweiten Trennwand 42 dazu führen würden, dass ohne eine Beweglichkeit um die zweite Achse 100 ein Abtransport von Schüttgut aus dem ersten Lagerbereich 20 nicht vollständig und ohne Totraumbildung möglich wäre. In Fig. 4 ist das erste Förderorgan 60 parallel und unmittelbar benachbart zur zweiten Trennwand 42 angeordnet. Hierzu ist der erste Arm 140 um 6° gegenüber der ersten Trennwand 40 verschwenkt und das erste Förderorgan 60 um weitere 29° gegenüber dem ersten Arm 140. In Fig. 5 ist der erste Arm 140 um 29° gegenüber der ersten Trennwand 40 und das erste Förderorgan 60 um 29° gegenüber dem ersten Arm 140 in die entgegengesetzte Richtung verschwenkt. Somit ist das erste Förderorgan 60 parallel zur ersten Trennwand 40 angeordnet.

Um einen kontinuierlichen Abtransport von Schüttgut zu ermöglichen wird vorzugsweise der erste Arm 140 aus der in Fig. 4 gezeigten Position um 23° im Uhrzeigersinn verschwenkt, während gleichzeitig das erste Förderorgan 60 um 58° entgegen dem Uhrzeigersinn verschwenkt wird. So wird die in Fig. 5 gezeigte Position erreicht. Anschließend kehrt sich die Bewegung um, der erste Arm 140 wird um 23° entgegen dem Uhrzeigersinn verschwenkt, während das erste Förderorgan 60 um 58° im Uhrzeigersinn verschwenkt wird. Jeweils an den Umkehrpunkten wird das erste Förderorgan 60 um die Höhe der abzutragenden Schichtdicke des Schüttgutes abgesenkt.

Fig. 4 und Fig. 5 zeigen auch die dritte Achse 105, um welche das erste Förderorgan vertikal verschwenkbar ist.

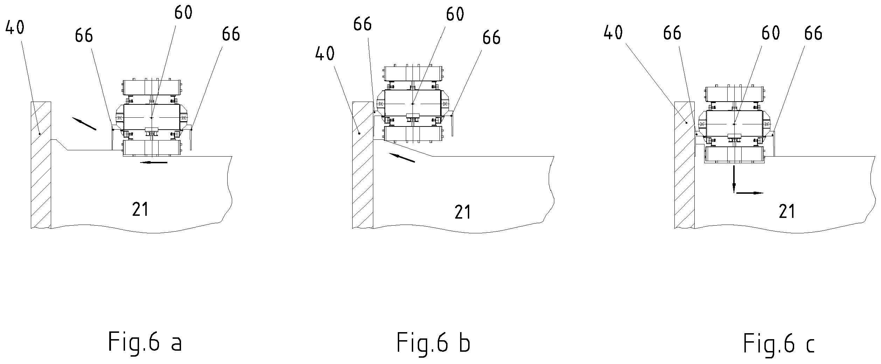

Fig. 6 zeigt, wie mit einer Schneidvorrichtung 66, welche an dem ersten Förderorgan angeordnet ist, eine Materialanhaftung an der ersten Trennwand 40 entfernt werden kann. Das erste Förderorgan 60 wird in Richtung der ersten Trennwand 40 bewegt. In einem ersten Abstand zur ersten Trennwand, welche geringer ist als die Förderbreite des ersten Förderorgan 60, wird das erste Förderorgan 60 angehoben. Nach dem Erreichen der ersten Trennwand 40 wird das Förderorgan 60 abgesenkt und zwar, um den Betrag um welchen das erste Förderorgan 60 zuvor angehoben wurde, zuzüglich der Höhe der abzutragenden Schichtdicke des Schüttgutes, welche sich aus dem gewünschten Fördervolumen ergibt. Hierdurch wird die erste Schneidvorrichtung 66 in einem materialfreien Bereich sehr nah an die ersten Trennwand 40 geführt. Anhaftendes Material wird durch die Abwärtsbewegung der Schneidvorrichtung 66 von der ersten Trennwand 40 entfernt.

### Bezugszeichen

- 10: Rundlager
- 20: erster Lagerbereich
- 21: erstes Schüttgut
- 22: zweiter Lagerbereich
- 23: zweites Schüttgut
- 24: dritter Lagerbereich
- 26: vierter Lagerbereich
- 28: fünfter Lagerbereich
- 30: sechster Lagerbereich
- 32: siebter Lagerbereich
- 40: erste Trennwand
- 42: zweite Trennwand
- 44: dritte Trennwand
- 46: vierte Trennwand
- 48: fünfte Trennwand
- 50: sechste Trennwand
- 52: siebte Trennwand
- 60: erstes Förderorgan
- 62: Hebevorrichtung
- 64: Gegengewicht
- 66: Schneidvorrichtung
- 70: erster Bandausleger
- 80: Gebäude
- 90: zentrale Achse
- 100: zweite Achse
- 105: dritte Achse
- 110: erste Bandbrücke
- 120: Zentralschurre
- 130: Abtransportband
- 140: erster Arm

## Patentansprüche

1. Rundlager (10) für Schüttgut (21, 23), wobei das Rundlager (10) wenigstens einen ersten Lagerbereich (20) für Schüttgut (21, 23) und einen zweiten Lagerbereich (22) für Schüttgut (21, 23) aufweist, wobei der erste Lagerbereich (20) und der zweite Lagerbereich (22) durch wenigstens eine erste Trennwand (40) getrennt sind, wobei das Rundlager (10) wenigstens eine erste Entnahmevorrichtung aufweist, wobei die erste Entnahmevorrichtung um die zentrale Achse (90) des Rundlagers (10) drehbar angeordnet ist, wobei die zentrale Achse (90) senkrecht angeordnet ist, wobei die erste Entnahmevorrichtung ein erstes Förderorgan (60) aufweist, **dadurch gekennzeichnet, dass** die erste Entnahmevorrichtung eine zweite Achse (100) aufweist, wobei die zweite Achse (100) parallel und mit einem ersten Achsabstand zur zentralen Achse (90) angeordnet ist, wobei die erste Entnahmevorrichtung einen ersten Arm (140) aufweist, wobei der erste Arm (140) um die zentrale Achse (90) rotierbar ist, wobei die zentrale Achse (90) und die zweite Achse (100) durch den ersten Arm (140) verlaufen, wobei das erste Förderorgan (60) um die zweite Achse (100) drehbar mit dem ersten Arm (140) verbunden ist.

2. Rundlager (10) nach Anspruch 1, **dadurch gekennzeichnet, dass** die erste Entnahmevorrichtung einen ersten Drehantrieb aufweist, wobei der erste Drehantrieb zur Rotation des ersten Armes (140) um die zentrale Achse (90) ausgebildet ist.

3. Rundlager (10) nach einem der vorstehenden Ansprüche, **dadurch gekennzeichnet, dass** die erste Entnahmevorrichtung einen zweiten Drehantrieb aufweist, wobei der zweite Drehantrieb zur Rotation des ersten Förderorgans (60) um die zweite Achse (100) ausgebildet ist.

4. Rundlager (10) nach einem der vorstehenden Ansprüche, **dadurch gekennzeichnet, dass** das erste Förderorgan (60) vertikal schwenkbar ist.

5. Rundlager (10) nach einem der vorstehenden Ansprüche, **dadurch gekennzeichnet, dass** die Gesamtlänge des ersten Förderorgans (60) größer ist als der Achsabstand der zentralen Achse (90) und der zweiten Achse (100) von der ersten Entnahmevorrichtung.

6. Rundlager (10) nach einem der vorstehenden Ansprüche, **dadurch gekennzeichnet, dass** das erste Förderorgan (60) als Kettenausleger ausgebildet ist.

7. Rundlager (10) nach einem der vorstehenden Ansprüche, **dadurch gekennzeichnet, dass** das Rundlager (10) eine Zentralschurre (120) aufweist, wobei die Zentralschurre (120) mittig um die zentrale Achse (90) angeordnet ist, wobei die Zentralschurre (120) das durch das erste Förderorgan (60) geförderte Schüttgut (21, 23) nach unten abtransportiert.

8. Rundlager (10) nach Anspruch 7, **dadurch gekennzeichnet, dass** unterhalb des Rundlagers (10) und unterhalb der Zentralschurre (120) ein Abtransportband (130) angeordnet ist, wobei das Abtransportband (130) zum Abtransport des Schüttgutes (21, 23) ausgebildet ist.

9. Rundlager (10) nach einem der vorstehenden Ansprüche, **dadurch gekennzeichnet, dass** das Rundlager wenigstens drei, bevorzugt drei bis zehn, besonders bevorzugt vier bis acht Lagerbereiche aufweist, welche jeweils durch Trennwände voneinander getrennt sind.

10. Rundlager (10) nach einem der Ansprüche 7 bis 9, **dadurch gekennzeichnet, dass** der Abwurfpunkt oberhalb der Zentralschurre (120) angeordnet ist.

11. Rundlager (10) nach einem der vorstehenden Ansprüche, **dadurch gekennzeichnet, dass** das erste Förderorgan (60) einen ersten Seitenbereich und einen zweiten Seitenbereich aufweist, wobei der erste Seitenbereich und der zweite Seitenbereich senkrecht entlang der Längsrichtung des ersten Förderorgans (60) angeordnet sind, wobei an dem ersten Seitenbereich eine erste Schneidvorrichtung (66) angeordnet ist, wobei an dem zweiten Seitenbereich eine zweite Schneidvorrichtung (66) angeordnet ist.

12. Rundlager (10) nach einem der vorstehenden Ansprüche, **dadurch gekennzeichnet, dass** das Rundlager (10) einen ersten Bandausleger (70) aufweist, wobei der erste Bandausleger (70) um die zentrale Achse (90) drehbar angeordnet ist, wobei der erste Bandausleger (70) zum Einbringen von Schüttgut (21, 23) in den ersten Lagerbereich (20) und den zweiten Lagerbereich (22) ausgebildet ist.

13. Rundlager (10) nach Anspruch 12, **dadurch gekennzeichnet, dass** das Rundlager (10) eine erste Bandbrücke (110) aufweist, wobei die erste Bandbrücke (110) oberhalb des ersten Bandauslegers (70) angeordnet ist, wobei die erste Bandbrücke (110) zur Zuführung von Schüttgut (21, 23) zum ersten Bandausleger (70) ausgebildet ist.

14. Rundlager (10) nach einem der Ansprüche 12 bis 13, **dadurch gekennzeichnet, dass** der erste Bandausleger (70) vertikal schwenkbar ist.

15. Rundlager (10) nach einem der Ansprüche 12 bis 13, **dadurch gekennzeichnet, dass** der erste Bandausleger (70) eine Teleskopschurre aufweist.

16. Rundlager (10) nach einem der vorstehenden Ansprüche, **dadurch gekennzeichnet, dass** das Rundlager (10) einen Transferturm aufweist, wobei der Transferturm entlang der zentralen Achse (90) angeordnet ist.

17. Verfahren zum Ausstapeln von Schüttgut (21, 23) aus einem Rundlager (10) nach einem der vorher stehenden Ansprüche in Kombination mit Anspruch 4, wobei der erste Lagerbereich (20) auf der einen Seite eine erste Trennwand (40) und auf der gegenüberliegenden Seite eine zweite Trennwand (42) aufweist, wobei das Verfahren die folgenden Schritte aufweist:
a) Anordnung des ersten Förderorgans (60) der ersten Entnahmevorrichtung oberhalb des ersten Lagerbereichs (20),
b) Absenken des ersten Förderorgans (60) bis das erste Förderorgan (60) das Schüttgut (21, 23) berührt, welches im ersten Lagerbereich (20) angeordnet ist,
c) seitliches Verschwenken des ersten Förderorgans (60) in Richtung der ersten Trennwand (40),
d) Absenken des ersten Förderorgans (60) um die Höhe der abzutragenden Schichtdicke des Schüttgutes (21, 23),
e) seitliches Verschwenken des ersten Förderorgans (60) von der ersten Trennwand (40) in Richtung der zweiten Trennwand (42),
f) Absenken des ersten Förderorgans (60) um die Höhe der abzutragenden Schichtdicke des Schüttguts (21, 23),
wobei das erste Förderorgan (60) am Ende von Schritt c) parallel zur ersten Trennwand (40) angeordnet ist, wobei das erste Förderorgan (60) am Ende von Schritt e) parallel zur zweiten Trennwand (42) angeordnet ist.

18. Verfahren nach dem Anspruch 17, **dadurch gekennzeichnet, dass** in Schritt c) das erste Förderorgan (60) in einem ersten Abstand zur ersten Trennwand (40) angehoben wird und nach dem Erreichen der ersten Trennwand (40) in Schritt d) in die Endposition abgesenkt wird, wobei der erste Abstand geringer ist als die Förderbreite des ersten Förderorgans (60).

19. Verfahren nach einem der Ansprüche 17 bis 18, **dadurch gekennzeichnet, dass** Schüttgut (21, 23) über den ersten Bandausleger (70) in den zweiten Lagerbereich (22) eingestapelt wird.

## Claims

1. Circular store (10) for bulk material (21, 23), wherein the circular store (10) has at least one first storage region (20) for bulk material (21, 23) and one second storage region (22) for bulk material (21, 23), wherein the first storage region (20) and the second storage region (22) are separated by at least one first partition wall (40), wherein the circular store (10) has at least one first retrieval device, wherein the first retrieval device is disposed so as to be rotatable about the central axis (90) of the circular store (10), wherein the central axis (90) is vertically disposed, wherein the first retrieval device has a first conveying member (60), **characterized in that** the first retrieval device has a second axis (100), wherein the second axis (100) by way of a first axial spacing is disposed so as to be parallel to the central axis (90), wherein the first retrieval device has a first arm (140), wherein the first arm (140) is rotatable about the central axis (90), wherein the central axis (90) and the second axis (100) run through the first arm (140), wherein the first conveying member (60) is connected to the first arm (140) so as to be rotatable about the second axis (100).

2. Circular store (10) according to Claim 1, **characterized in that** the first retrieval device has a first rotary drive, wherein the first rotary drive is configured for rotating the first arm (140) about the central axis (90).

3. Circular store (10) according to one of the preceding claims, **characterized in that** the first retrieval device has a second rotary drive, wherein the second rotary drive is configured for rotating the first conveying member (60) about the second axis (100) .

4. Circular store (10) according to one of the preceding claims, **characterized in that** the first conveying member (60) is vertically pivotable.

5. Circular store (10) according to one of the preceding claims, **characterized in that** the overall length of the first conveying member (60) is larger than the axial spacing of the central axis (90) and of the second axis (100) from the first retrieval device.

6. Circular store (10) according to one of the preceding claims, **characterized in that** the first conveying member (60) is configured as a chain boom.

7. Circular store (10) according to one of the preceding claims, **characterized in that** the circular store (10) has a central chute (120), wherein the central chute (120) is disposed so as to be centric about the central axis (90), wherein the central chute (120) discharges downwards the bulk material (21, 23) conveyed by the first conveying member (60) .

8. Circular store (10) according to Claim 7, **characterized in that** a discharge transport belt (130) is disposed below the circular store (10) and below the central chute (120), wherein the discharge transport belt (130) is configured for discharging the bulk material (21, 23).

9. Circular store (10) according to one of the preceding claims, **characterized in that** the circular store has at least three, preferably three to ten, particularly preferably four to eight, storage regions which are in each case mutually separated by partition walls.

10. Circular store (10) according to one of Claims 7 to 9, **characterized in that** the drop-off point is disposed above the central chute (120).

11. Circular store (10) according to one of the preceding claims, **characterized in that** the first conveying member (60) has a first lateral region and a second lateral region, wherein the first lateral region and the second lateral region are disposed vertically along the longitudinal direction of the first conveying member (60), wherein a first cutting device (66) is disposed on the first lateral region, wherein a second cutting device (66) is disposed on the second lateral region.

12. Circular store (10) according to one of the preceding claims, **characterized in that** the circular store (10) has a first belt boom (70), wherein the first belt boom (70) is disposed so as to be rotatable about the central axis (90), wherein the first belt boom (70) is configured for introducing bulk material (21, 23) into the first storage region (20) and the second storage region (22).

13. Circular store (10) according to Claim 12, **characterized in that** the circular store (10) has a first belt bridge (110), wherein the first belt bridge (110) is disposed above the first belt boom (70), wherein the first belt bridge (110) is configured for feeding bulk material (21, 23) to the first belt boom (70).

14. Circular store (10) according to one of Claims 12 to 13, **characterized in that** the first belt boom (70) is vertically pivotable.

15. Circular store (10) according to one of Claims 12 to 13, **characterized in that** the first belt boom (70) has a telescopic chute.

16. Circular store (10) according to one of the preceding claims, **characterized in that** the circular store (10) has a transfer tower, wherein the transfer tower is disposed along the central axis (90) .

17. Method for unloading bulk material (21, 23) from a circular store (10) according to one of the preceding claims in combination with Claim 4, wherein the first storage region (20) on the one side has a first partition wall (40) and on the opposite side has a second partition wall (42), wherein the method comprises the following steps:
a) disposing the first conveying member (60) of the first retrieval device above the first storage region (20);
b) lowering the first conveying member (60) until the first conveying member (60) contacts the bulk material (21, 23) that is disposed in the first storage region (20);
c) laterally pivoting the first conveying member (60) in the direction of the first partition wall (40) ;
d) lowering the first conveying member (60) by the height of the layer thickness of the bulk material (21, 23) to be removed;
e) laterally pivoting the first conveying member (60) from the first partition wall (40) in the direction of the second partition wall (42);
f) lowering the first conveying member (60) by the height of the layer thickness of the bulk material (21, 23) to be removed;
wherein the first conveying member (60) at the end of step c) is disposed parallel to the first partition wall (40), wherein the first conveying member (60) at the end of step e) is disposed parallel to the second partition wall (42).

18. Method according to Claim 17, **characterized in that** in step c) the first conveying member (60) at a first spacing from the first partition wall (40) is lifted and upon reaching the first partition wall (40) in step d) is lowered to the terminal position, wherein the first spacing is less than the conveying width of the first conveying member (60).

19. Method according to one of Claims 17 to 18, **characterized in that** bulk material (21, 23) by way of the first belt boom (70) is loaded into the second storage region (22).

## Revendications

1. Entrepôt circulaire (10) pour produits en vrac (21, 23), dans lequel l'entrepôt circulaire (10) présente au moins une première zone de stockage (20) pour des produits en vrac (21, 23) et une deuxième zone de stockage (22) pour des produits en vrac (21, 23), la première zone de stockage (20) et la deuxième zone de stockage (22) étant séparées par au moins une première cloison (40), dans lequel l'entrepôt circulaire (10) présente au moins un premier dispositif de prélèvement, le premier dispositif de prélèvement étant disposé en rotation autour de l'axe central (90) de l'entrepôt circulaire (10), dans lequel l'axe central (90) est disposé verticalement, dans lequel le premier dispositif de prélèvement présente un premier organe de transport (60),
**caractérisé en ce que** le premier dispositif de prélèvement présente un deuxième axe (100), le deuxième axe (100) étant disposé en parallèle et à une première distance d'axe en axe par rapport à l'axe central (90), dans lequel le premier dispositif de prélèvement présente un premier bras (140), le premier bras (140) pouvant tourner autour de l'axe central (90), l'axe central (90) et le deuxième axe (100) s'étendant à travers le premier bras (140), dans lequel le premier organe de transport (60) est relié au premier bras (140) en rotation autour du deuxième axe (100).

2. Entrepôt circulaire (10) selon la revendication 1, **caractérisé en ce que** le premier dispositif de prélèvement présente un premier dispositif d'entraînement en rotation, dans lequel le premier dispositif d'entraînement en rotation est réalisé pour une rotation du premier bras (140) autour de l'axe central (90).

3. Entrepôt circulaire (10) selon l'une quelconque des revendications précédentes, **caractérisé en ce que** le premier dispositif de prélèvement présente un deuxième dispositif d'entraînement en rotation, le deuxième dispositif d'entraînement en rotation étant réalisé pour une rotation du premier organe de transport (60) autour du deuxième axe (100).

4. Entrepôt circulaire (10) selon l'une quelconque des revendications précédentes, **caractérisé en ce que** le premier organe de transport (60) est pivotant verticalement.

5. Entrepôt circulaire (10) selon l'une quelconque des revendications précédentes, **caractérisé en ce que** la longueur totale du premier organe de transport (60) est supérieure à la distance d'axe en axe de l'axe central (90) et du deuxième axe (100) par rapport au premier dispositif de prélèvement.

6. Entrepôt circulaire (10) selon l'une quelconque des revendications précédentes, **caractérisé en ce que** le premier organe de transport (60) est réalisé sous forme de poutre à chaîne en porte-à-faux.

7. Entrepôt circulaire (10) selon l'une quelconque des revendications précédentes, **caractérisé en ce que** l'entrepôt circulaire (10) présente une goulotte centrale (120), la goulotte centrale (120) étant disposée de manière centrée autour de l'axe central (90), dans lequel la goulotte centrale (120) évacue par le bas les produits en vrac (21, 23) transportés par le premier organe de transport (60).

8. Entrepôt circulaire (10) selon la revendication 7, **caractérisé en ce qu'**une bande d'évacuation (130) est disposée au-dessous de l'entrepôt circulaire (10) et au-dessous de la goulotte centrale (120), la bande d'évacuation (130) étant réalisée pour évacuer les produits en vrac (21, 23).

9. Entrepôt circulaire (10) selon l'une quelconque des revendications précédentes, **caractérisé en ce que** l'entrepôt circulaire présente au moins trois, de préférence de trois à dix, de manière particulièrement préférée de quatre à huit zones de stockage qui sont respectivement séparées les unes des autres par des cloisons.

10. Entrepôt circulaire (10) selon l'une quelconque des revendications 7 à 9, **caractérisé en ce que** le point de déversement est disposé au-dessus de la goulotte centrale (120).

11. Entrepôt circulaire (10) selon l'une quelconque des revendications précédentes, **caractérisé en ce que** le premier organe de transport (60) présente une première zone latérale et une deuxième zone latérale, dans lequel la première zone latérale et la deuxième zone latérale sont disposées verticalement le long de la direction longitudinale du premier organe de transport (60), dans lequel un premier dispositif de coupe (66) est disposé au niveau de la première zone latérale, dans lequel un deuxième dispositif de coupe (66) est disposé au niveau de la deuxième zone latérale.

12. Entrepôt circulaire (10) selon l'une quelconque des revendications précédentes, **caractérisé en ce que** l'entrepôt circulaire (10) présente une première poutre à bande en porte-à-faux (70), la première poutre à bande en porte-à-faux (70) étant disposée en rotation autour de l'axe central (90), dans lequel la première poutre à bande en porte-à-faux (70) est réalisée pour charger des produits en vrac (21, 23) dans la première zone de stockage (20) et dans la deuxième zone de stockage (22).

13. Entrepôt circulaire (10) selon la revendication 12, **caractérisé en ce que** l'entrepôt circulaire (10) présente un premier portique à bande (110), le premier portique à bande (110) étant disposé au-dessus de la première poutre à bande en porte-à-faux (70), dans lequel le premier portique à bande (110) est réalisé pour amener des produits en vrac (21, 23) à la première poutre à bande en porte-à-faux (70).

14. Entrepôt circulaire (10) selon l'une quelconque des revendications 12 à 13, **caractérisé en ce que** la première poutre à bande en porte-à-faux (70) peut pivoter verticalement.

15. Entrepôt circulaire (10) selon l'une quelconque des revendications 12 à 13, **caractérisé en ce que** la première poutre à bande en porte-à-faux (70) présente une goulotte télescopique.

16. Entrepôt circulaire (10) selon l'une quelconque des revendications précédentes, **caractérisé en ce que** l'entrepôt circulaire (10) présente une tour de transfert, la tour de transfert étant disposée le long de l'axe central (90).

17. Procédé permettant de décharger des produits en vrac (21, 23) à partir d'un entrepôt circulaire (10) selon l'une quelconque des revendications précédentes en combinaison avec la revendication 4, dans lequel la première zone de stockage (20) présente d'un côté une première cloison (40) et du côté opposé une deuxième cloison (42), le procédé présentant les étapes suivantes consistant à :
a) disposer un premier organe de transport (60) du premier dispositif de prélèvement au-dessus de la première zone de stockage (20),
b) abaisser le premier organe de transport (60) jusqu'à ce que le premier organe de transport (60) entre en contact avec les produits en vrac (21, 23) qui sont disposés dans la première zone de stockage (20),
c) faire pivoter latéralement le premier organe de transport (60) en direction de la première cloison (40),
d) abaisser le premier organe de transport (60) de la hauteur de l'épaisseur de couche à enlever des produits en vrac (21, 23),
e) faire pivoter latéralement le premier organe de transport (60) de la première cloison (40) vers la deuxième cloison (42),
f) abaisser le premier organe de transport (60) de la hauteur de l'épaisseur de couche à enlever des produits en vrac (21, 23),
dans lequel, à la fin de l'étape c), le premier organe de transport (60) est disposé en parallèle à la première cloison (40), dans lequel, à la fin de l'étape e), le premier organe de transport (60) est disposé en parallèle à la deuxième cloison (42).

18. Procédé selon la revendication 17, **caractérisé en ce qu'**à l'étape c), le premier organe de transport (60) est soulevé à une première distance par rapport à la première cloison (40), et après avoir atteint la première cloison (40) à l'étape d), est abaissé dans la position d'extrémité, la première distance étant inférieure à la largeur de transport du premier organe de transport (60).

19. Procédé selon l'une quelconque des revendications 17 à 18, **caractérisé en ce que** les produits en vrac (21, 23) sont empilés dans une deuxième zone de stockage (22) par l'intermédiaire de la première poutre à bande en porte-à-faux (70).
